# EUROPEAN PATENT SPECIFICATION

(11) **EP 2 442 165 B1**
(45) Date of publication and mention of the grant of the patent: **15.04.2015**
(21) Application number: 10187757.9
(22) Date of filing: 15.10.2010
(51) Int. Cl.: G02B 6/122, G02B 6/30

(54) **Coupling methods and systems using a taper**
Kopplungsverfahren und Systeme mit einem Taper
Procédés de couplage et systèmes utilisant un raccord progressif

(43) Date of publication of application: 18.04.2012
(73) Proprietor: Huawei Technologies Co., Ltd., Longgang District Shenzhen, Guangdong 518129 (CN)
(72) Inventor: Taillaert, Dirk, 8450 Bredene (BE); Vermeulen, Diedrik, 9170 St. Pauwels (BE); Schrauwen, Jonathan, 9050 Gentbrugge (BE)
(74) Representative: Kreuz, Georg Maria

(56) References cited:
- WO-A1-2005/064371
- WO-A2-02/075387
- WO-A2-03/044580
- DE-A1-102007 002 191
- US-A1- 2007 081 764
- US-B1- 7 643 710

## Description

### Field of the invention

The invention relates to the field of optical devices. More particularly, the present invention is related to methods and optical devices for coupling radiation into and from an optical waveguide of an integrated optical circuit, e.g. from or to an optical fiber, as well as methods for manufacturing such optical devices.

### Background of the invention

Coupling of radiation between an optical integrated circuit and an optical fiber has received large interest. Especially in the case where the size of the mode of the radiation in the two media between which radiation coupling is to be achieved differs largely, a significant problem may arise. For example in the case of coupling between a single-mode optical fiber used in telecom, wherein the mode size typically is about 10 micrometers in diameter, and e.g. a semiconductor integrated waveguide, such as in silicon on insulator chips wherein the mode size typically is 0.4 x 0.2 micrometers, bridging this difference requires specific solutions, such as e.g. a mode-size adapter.

One example of a mode size converter is an SOI inverted taper with an overlying waveguide, used for coupling between a silicon-on-insulator (SOI) chip and a special optical fiber. Nevertheless, such a coupling device does not allow coupling to a standard fiber with low loss, as there is still a large mismatch between the mode of the overlying waveguide and an optical fiber. To achieve low coupling losses, a lensed fiber or a small core fiber having a high numerical aperture is used, which has a smaller mode size than standard single-mode fibers. The latter results in the need for precise alignment of the fiber.

Another solution is the use of a taper based on a waveguide made of the buried oxide underlying the integrated optical waveguide. The latter results in a minimal theoretical loss of at least 3dB. For generating an underlying waveguide, the silicon subtrate must be etched away locally.

Documents DE 10 2007 002 191 and WO2005/064371 both disclose the use of tapers having an end facet corresponding to the large taper end which is coupled to an optical fiber and which couples the light received from the fiber into an integrated waveguide.

Other types of mode-size transforming devices for coupling between an integrated waveguide, e.g. integrated waveguide on SOI, and a standard fiber are 3D silicon tapers, but these require relatively complex manufacturing steps such as for example the deposition of thick amorphous silicon and/or grayscale etching.

Still another structure used for coupling radiation between SOI waveguides and a single mode fiber is a grating coupler. Grating couplers can achieve relatively low coupling losses but typically are restricted to efficient operation in a limited bandwidth. For some applications, a bandwidth of more than 100nm is required, which is not feasible using grating couplers.

As can be seen, several mode-size converter solutions exist for SOI waveguides, but the fabrication of these typically are very challenging and requires special processing ste ps.

An alternative to a mode-size converter is a lens or a lensed fiber, but that is a very expensive solution because of the required alignment tolerances.

During fabrication, usually a plurality of optical integrated circuits are processed on the same wafer, resulting in one wafer comprising multiple, e.g. hundreds or thousands, of identical circuits. Such a wafer then is cut into individual dice using a dicing saw, resulting in a rough facet for coupling radiation. Reducing the roughness may be performed using facet polishing, but this is a delicate, tedious, and expensive process.

### Summary of the invention

It is an object of embodiments of the present invention to provide efficient devices and methods for optical coupling to and from a waveguide integrated in an integrated optical circuit, as well as methods for manufacturing such devices. It is an advantage of embodiments according to the present invention that efficient coupling from and to an optical integrated waveguide integrated can be obtained. The latter can be obtained amongst others based on accurate mode-size conversion.

It is an advantage of at least some embodiments of the present invention that a high coupling efficiency is obtained. It is an advantage of at least some embodiments of the present invention that it provides an efficient solution operable in a broadband wavelength range. It is an advantage of at least some embodiments of the present invention that it provides a solution that is alignment tolerant. It is an advantage of at least some embodiments of the present invention that systems with a small footprint can be obtained. It is an advantage of at least some embodiments of the present invention that systems can be fabricated with a waferscale process at low cost. It is an advantage of at least some embodiments according to the present invention that manufacturing techniques used are compatible with the manufacturing techniques used for integrated optical circuits. It is an advantage that no optical facet polishing is required. It is an advantage of at least some embodiments according to the present invention that two or more of the above advantages can be combined.

The above objective is accomplished by a method and device according to the present invention.

The present invention relates to an optical device for handling a radiation beam, the optical device comprising a semiconductor die comprising an integrated semiconductor optical waveguide core integrated on the semiconductor die, and an at least partially overlying waveguide comprising at least one first taper shaped for coupling the radiation beam between the integrated semiconductor optical waveguide and an external medium, the first taper having an entrance/exit facet for receiving/emitting a radiation beam from/to the external medium, wherein the facet of the first taper is spaced from the edge of the semiconductor die over a distance d, the distance d being at least 1 µm and less than 200µm. It is an advantage of embodiments according to the present invention that cutting of the dies does not induce a reduced coupling efficiency at the incoupling facet due to scattering, as the facet is not cut, while on the other hand an efficient coupling loss still is obtained. It is an advantage that there is no need to polish the facet.

The first taper may be part of a polymer optical waveguide core. It is an advantage of embodiments according to the present invention that the coupling solution can be efficiently and accurately manufactured, using conventional techniques, such as imprinting or etching. It is an advantage of embodiments according to the present invention that the receiving and/or emitting facet of the first taper can be made quite large in diameter, allowing a good coupling with relatively low loss. It is an advantage of embodiments according to the present invention that the taper used for receiving or emitting the radiation externally can be made from a material that can easily be handled and processed.

An angle between the facet plane of the first taper and an average plane through the semiconductor die may be between 80° and 90°. It is an advantage of embodiments according to the present invention that efficient coupling can be obtained between e.g. an optical fiber and the taper, for finally coupling to the semiconductor waveguide.

At least the first taper may comprise a top cladding. It is an advantage of embodiments according to the present invention that the top cladding can be made of an index matching material for matching the index between the polymer waveguide and the index between of the external medium, e.g. the optical fiber.

The first taper may be adapted for altering a mode size of the radiation beam in two directions. It is an advantage of embodiments according to the present invention that accurate mode converting can be performed.

The integrated semiconductor optical waveguide core may comprise a semiconductor taper, the semiconductor taper being adapted for increasing the size of the radiation mode upon decreasing the size of the semiconductor taper structure. It is an advantage of embodiments according to the present invention that efficient coupling can be obtained using structures that can be relatively easily manufactured.

The semiconductor taper may expand the optical mode size for forcing the radiation out of the integrated semiconductor optical waveguide core. It is an advantage of embodiments according to the present invention that coupling between the first taper and the semiconductor optical waveguide core can further be increased by using an additional taper.

The semiconductor taper may comprise a double tip structure, a second tip completely underlying the first tip. It is an advantage of embodiments according to the present invention that stringent requirements for the manufacturing of the taper tip can be reduced.

The external medium may be an optical fiber and the device may be coupled to at least one optical fiber using an index matching material between a facet of the at least one optical fiber and the facet of the first taper.

The external medium may be a laser and the device may be arranged with respect to the laser for coupling radiation in at the facet of the first taper.

The present invention also relates to a method for fabricating an optical device, the method comprising obtaining a substrate wafer comprising an integrated semiconductor optical waveguide core, providing an at least partially overlying optical waveguide at least partly overlapping the integrated semiconductor optical waveguide core, the at least partially overlying optical waveguide comprising a first taper having a facet, and cutting the substrate wafer into a plurality of individual dies, such that for at least one of the individual dies, the distance between the cutting edge and the facet of the first taper is between 1 micrometer and 200 micrometer. It is an advantage of embodiments according to the present invention that optical coupling can be obtained in an efficient manner through a facet that is spaced from the edge of the optical device and that can be manufactured in a manner that the facet is not damaged upon cutting. It is an advantage of embodiments according to the present invention that the end facet wherein/whereout radiation coupling is to be performed has a low roughness.

The method furthermore may comprise, after said cutting, aligning a facet of an optical fiber and the facet of the first taper and providing an optical coupling.

Embodiments of the present invention can advantageously be applied for coupling radiation into or from an optical fiber.

Providing an optical coupling may comprise glueing the facet of the optical fiber to the facet of the first taper using an index matching glue. It is an advantage of embodiments according to the present invention that further optimization of the optical coupling can be obtained using index matching materials.

Providing the first taper may comprise providing a polymer waveguide comprising the first taper with facet.

Providing the first taper with facet may comprise imprinting the first taper with facet. It is an advantage of embodiments according to the present invention that conventional manufacturing techniques can be applied.

Receiving a substrate wafer may comprise receiving a substrate wafer comprising a semiconductor waveguide and a semiconductor taper, being adapted for increasing the size of the radiation mode upon decreasing the size of the structure.

Particular and preferred aspects of the invention are set out in the accompanying independent and dependent claims. Features from the dependent claims may be combined with features of the independent claims and with features of other dependent claims as appropriate and not merely as explicitly set out in the claims. These and other aspects of the invention will be apparent from and elucidated with reference to the embodiment(s) described hereinafter.

### Brief description of the drawings

FIG. 1 illustrates one example of an optical device for coupling radiation between an integrated semiconductor optical waveguide core and an external source according to an embodiment of the present invention
FIG. 2 illustrates a second example of an optical device for coupling radiation between an integrated semiconductor optical waveguide core and an external source according to an embodiment of the present invention
FIG. 3 illustrates an example of an optical device according to an embodiment of the present invention, the optical device being coupled to an optical fiber.
FIG. 4 and FIG. 5 illustrate a side view respectively top view of an optical device according to an embodiment of the present invention, the integrated semiconductor optical waveguide core comprising a tapered portion.
FIG. 6, FIG. 7 and FIG. 8 illustrate a side view, top view respectively elevated top view of an optical device or parts thereof according to an embodiment of the present invention, the integrated semiconductor optical waveguide core comprising a tapered portion with double tip structure.
FIG. 9 illustrates a method for manufacturing an optical device according to an embodiment of the present invention.
FIG. 10 illustrates different intermediate states of the optical device during the manufacturing technique thereof, according to an embodiment of the present invention.
FIG. 11 illustrates the coupling loss between a fiber and a polymer 3D taper for different square shaped facet sizes, the graph expressing the amount of loss as function of the facet width.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

In the following detailed description, numerous specific details are set forth in order to provide a thorough understanding of the disclosure and how it may be practiced in particular embodiments. However, it will be understood that the present disclosure may be practiced without these specific details. In other instances, well-known methods, procedures and techniques have not been described in detail, so as not to obscure the present disclosure. While the present disclosure will be described with respect to particular embodiments and with reference to certain drawings, the disclosure is not limited hereto. The drawings included and described herein are schematic and are not limiting the scope of the disclosure. It is also noted that in the drawings, the size of some elements may be exaggerated and, therefore, not drawn to scale for illustrative purposes.

Furthermore, the terms first, second, third and the like in the description, are used for distinguishing between similar elements and not necessarily for describing a sequence, either temporally, spatially, in ranking or in any other manner. It is to be understood that the terms so used are interchangeable under appropriate circumstances and that the embodiments of the disclosure described herein are capable of operation in other sequences than described or illustrated herein. Moreover, the terms top, bottom, over, under and the like in the description are used for descriptive purposes and not necessarily for describing relative positions. It is to be understood that the terms so used are interchangeable under appropriate circumstances and that the embodiments of the disclosure described herein are capable of operation in other orientations than described or illustrated herein.

It is to be noticed that the term "comprising" should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components or groups thereof. Thus, the scope of the expression "a device comprising means A and B" should not be limited to devices consisting only of the components A and B.

In embodiments and aspects of the present invention, where reference is made to an integrated optical waveguide or optical waveguide core, reference is made to an optical waveguide or optical waveguide core being integrated in an integrated optical circuit. An integrated optical circuit, which also may be referred to as photonic integrated circuit (PIC), may refer to a variety of forms and material systems such as for example low-index contrast waveguide platforms (e.g. polymer waveguides, glass/silica waveguides, AlₓGa₁₋ₓAs waveguides, InₓGa₁₋ₓAsyP_{1-y} waveguides), high-index contrast waveguides (e.g. Silicon-on-Insulator, semiconductor membranes), plasmonic waveguides (e.g. metal nano-particle arrays, metal layers), also called Planar Lightwave circuits (PLC). The integrated optical waveguide or optical waveguide core advantageously is integrated monolithically. Monolithical integration is the integration technology that uses a single processing flow to process the diverse components potentially using different materials. Heterogeneous integration is the integration technology for which the components are processed in separate process flows, which are then integrated at die or wafer level, e.g. BCB bonding, wafer bonding, and other bonding schemes, 3D integration. Hybrid integration is the integration of components or materials on processed photonic integrated platforms.

The devices and methods of the present invention are further described for the particular case of an SOI (Silicon-on-Insulator) material system, also referred to as silicon photonics system. However, the devices and methods of the present invention can be based on other material systems, such as for example III-V material systems, metallic layers, low index contrast material systems or a combination thereof. Silicon-on-Insulator is a very interesting material system for highly integrated photonic circuits. Using Silicon-on-insulator also has some technological advantages. Due to the CMOS industry, silicon technology has reached a level of maturity that outperforms any other plane chip manufacturing technique by several orders of magnitude in terms of performance, reproducibility and throughput. Nano-photonic ICs can be fabricated with wafer scale-processes, which means that a wafer can contain a high amount of photonic integrated circuits. Combined with the commercial availability of large wafers at a relative moderate cost, this means that the price per photonic integrated circuit can be very low.

Where in embodiments of the present invention reference is made to a taper, reference may be made to a light guiding structure that becomes more narrow, e.g. that reduces in cross-sectional size, e.g. that gradually narrows down in cross-section, along its length.

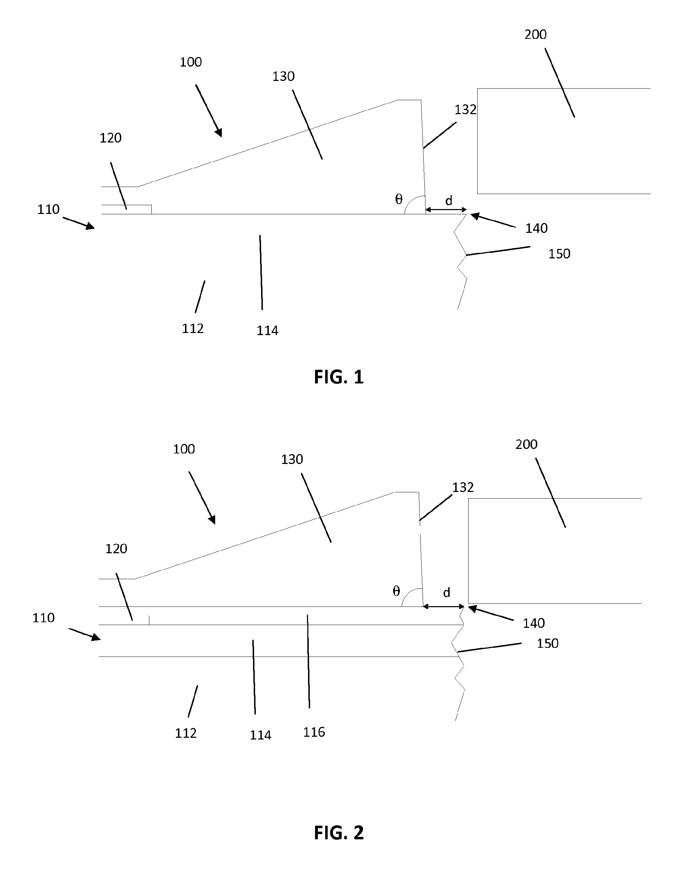

In a first aspect, the present invention relates to an optical device for handling a radiation beam. The optical device is particularly useful for coupling of radiation between an integrated semiconductor optical waveguide core integrated in a semiconductor die and an external medium, such as for example an optical fiber or optical fiber array or laser or laser array, although embodiments of the present invention do not need to be limited thereto. By way of illustration, embodiments of the present invention not limited thereby, standard and optional features will be discussed of the optical device, referring to FIG. 1 and FIG. 2 being two examples of optical devices according to embodiments of the present invention.

According to embodiments of the present invention, an optical device 100 is described comprising a semiconductor die 110. The semiconductor die 110 may for example be based on silicon-on-insulator (SOI) technology, although embodiments of the present invention are not limited thereto, as described above. The semiconductor die comprises an integrated semiconductor optical waveguide with an optical waveguide core 120 wherein the radiation can propagate integrated in the semiconductor die 110. Integration thereby may be monolithical integration, heterogeneous integration or hybrid integration, as indicated above. The semiconductor die 110 furthermore comprises at least an at least partially overlying waveguide overlying at least partially the integrated semiconductor optical waveguide and comprising at least one first taper 130 shaped for coupling the radiation beam between the integrated semiconductor optical waveguide core 120 and an external medium 200. The first taper 130 thus is part of an at least partially overlying optical waveguide 134 overlying at least partly the integrated semiconductor optical waveguide core 120. The overlying optical waveguide 134 may comprise several sections. The first taper 130 advantageously may have a tapered section that provides tapering horizontally as well as vertically. The latter assists in converting the radiation mode size and thus assists in dealing with difference in mode size between the external medium 200 and the integrated semiconductor optical waveguide core 120. The first taper 130 has an entrance/exit facet 132 for receiving or emitting a radiation beam from or towards the external medium. The facet 132 of the first taper 130 thereby is spaced from the edge 140 of the semiconductor die (formed upon cutting a substrate wafer into dies) over a distance d being at least 1µm but less than 200µm. More particularly, the semiconductor die 110 will have an edge 140 induced by a cut 150 as initially the optical structures are formed in plurality on one same semiconductor substrate, and only after formation, the individual optical circuits are cut. The latter is done for efficiency reasons as formation of a plurality of optical structures using the same processing results in a more efficient manufacturing process. After such cutting, the distance d between the facet 132 and the edge 140 is larger than 1µm. The latter has the advantage that the first taper facet 132 is not damaged during cutting, and thus, without polishing, a facet can be obtained that has sufficiently low roughness for efficient coupling. Furthermore, the distance d between the facet 132 and the edge 140 is smaller than 200 µm resulting in the possibility of bringing the external medium sufficiently close to the facet 132 that coupling losses can be limited.

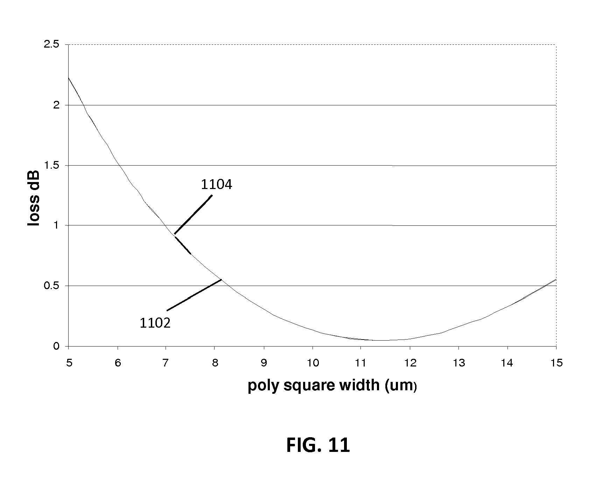

The first taper 130 facet may have a size adapted for matching e.g. an optical fiber as external medium. In one exemplary embodiment, the overlying waveguide has a tapered section making the transition from a 2 micrometer by 2 micrometer cross-section to a 10 micrometer by 10 micrometer facet size. The length, width and height of the first taper 130 can be selected so as to correspond with other features of the optical circuit. The dimensions of the large end of the first taper can be determined by the coupling to the external medium. In the case of a fiber, the mode of the polymer has to be matched to the mode of the fiber to achieve a high coupling efficiency. By way of illustration, the calculated coupling loss is shown between a single mode fiber (9.2um mode field diameter (MFD) at 1310nm wavelength) and a square polymer waveguide as a function of the dimensions of the polymer waveguide, in FIG. 11. Both the TM mode (1102) and the TE mode (1104) are shown, in the present case the TM and TE mode being coinciding. For coupling to a laser, the dimensions have to match the mode size of the laser. Typically a semiconductor laser mode is smaller than a fiber mode and the beam is typically elliptical instead of circular. So the dimensions of the polymer will be smaller and rectangular instead of square. The dimensions at the side of the semiconductor waveguide can be determined by the coupling from the semiconductor to the polymer waveguide (using the inverted silicon taper). In the case of SOI, 2x2um to 3x3um is an example of a good value. If the dimensions would be smaller the polymer taper would have to be longer and/or the required alignment accuracy polymer-silicon would be worse. If the dimensions would be larger, the coupling from silicon to polymer would be less efficient. (higher loss). The length of the taper can be determined to achieve a (nearly) adiabatic transition in the taper. In that case the coupling efficieny from the small mode to the large mode and vice-versa is lossless. This length can be calculated numerically. If the length is too short, there will be additional loss. If the length is too long, it takes up more space on the chip. Also if there is absorption loss in polymer, this loss will increase if the structure is longer. Longer structures may also be more difficult to fabricate. Although always linear tapers are shown in the drawings, other shapes could allow to make the taper shorter. The angle of the facet plane of the first taper with respect to an average plane through the semiconductor die may for example be between 80° and 90°, further assisting in good coupling. The shape of the first taper 130 can be linear, although embodiments of the present invention are not limited thereto. For example, the face of the taper can also be curved, e.g. for focusing the radiation in plane which may for example allow to use a shorter taper length. The first taper 130 may be made of any suitable material, such as for example polymers, oxides, oxinitrides..... Advantageously, the first taper 130 is made of a material that can be easily applied on the semiconductor die, e.g. by embossing, imprinting, imprinting lithography, etc. Polymer materials for exampe have the advantage of being imprintable. It thereby is an advantage that materials can be used that allow usage of low cost fabrication technology. It is an advantage of at least some embodiments of the present invention that the processing of the first taper can be done at wafer-scale, such that this does not need to be performed for each die separately. It is an advantage of at least some embodiments of the present invention that only one additional processing step is required for providing the taper and overlying waveguide.

As indicated above, the integrated semiconductor optical waveguide core 120 is integrated in a semiconductor die 110. At least in some embodiments of the present invention, such a semiconductor die 110 comprises a substrate 112 and a bottom cladding layer 114 whereon the integrated semiconductor optical waveguide core 120 is positioned. In some embodiments, as shown in FIG. 2, furthermore a top cladding layer 116 is present. In some particular examples, the overlying optical waveguide 134, and e.g. part of the first taper therein, may comprise a top cladding layer. Such a top cladding layer may be made of the same or similar index matching material as the material used for providing the transition between the facet and the external medium, e.g. optical fiber (see further).

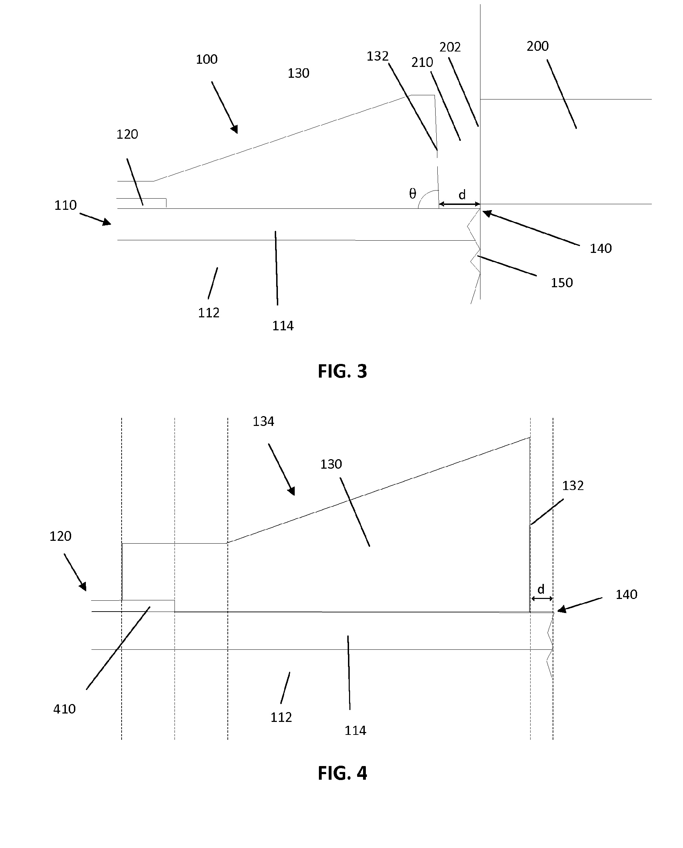

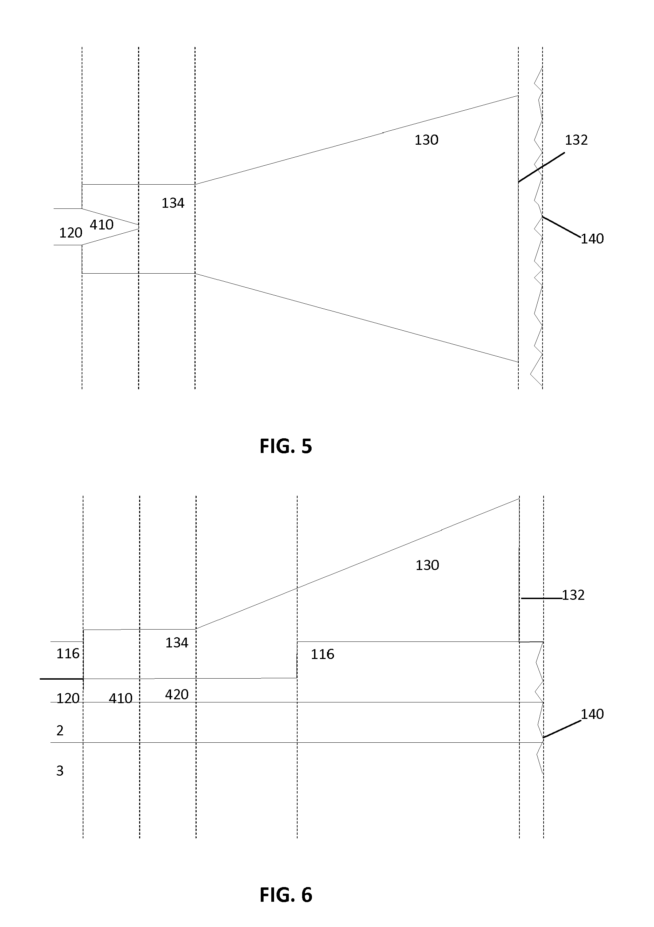

The external medium 200 typically may be a conventional optical fiber, such as for example a single mode fiber or an optical fiber array. Alternatively, such an external medium 200 also may be a laser or laser array. It is an advantage of embodiments according to the present invention that e.g. standard single mode fibers (e.g. Corning SMF28) can be used as external medium, as these have relatively large mode size diameters, e.g. around 10 micrometer, resulting in good alignment tolerances, as the required alignment accuracy is at least partially determined by the cost of the fiber alignment. When coupling the fiber to the optical device, a coupling is made between the fiber facet and the facet of the first taper. As discussed above, the size of the facet of the taper results in less stringent requirements with respect to alignment. When coupling the facets, e.g. an index matching material, such as for example an index matching fluid or gel or, for a more permanently attachment of e.g. a fiber and the chip, glue is used, assisting in an efficient coupling and avoiding unwanted reflections at the glass/air interface. Examples of such index matching materials thus are glue to permanently attach the fiber to the chip. The glues can be optimized in refractive index, may have low optical loss and good strength and reliability. By way of illustration, embodiments of the present invention not being limited thereby, an example of an optical device is shown in FIG. 3, wherein an optical fiber facet 202 of an optical fiber 200 as external medium is aligned and mounted in optical contact with the facet 132 of the first taper 130, using an index matching material 210 between the facet 132 of the first taper 130 and the facet 202 of the optical fiber 200. In at least some embodiments of the present invention, the integrated semiconductor optical waveguide core 120 advantageously also comprises a semiconductor taper 410 , more particularly an inverted lateral semiconductor taper. An inverted lateral taper is a taper that expands the optical mode size, i.e. it "forces" the light out of the semiconductor into the surrounding material. It can be referred to as an inverted taper, because the size of the mode increases as the size of the taper structure decreases whereas in a "normal" taper, the size of the mode increases as the size of the taper structure increases. The latter can be explained as follows. The mode size of an (optical) waveguide does not scale linearly with the dimensions of the waveguide core. It depends on the size of the waveguide, the refractive index and the wavelength. (waveguide mode is calculated numerically using mode solver software). If for example a SOI waveguide (silicon core and oxide cladding) is considered with dimensions 0.4um x 0.2um and 1550nm wavelength than the mode size of the fundamental waveguide mode is increased if the size of the waveguide is increased. If the size of this waveguide is decreased, the mode size of the waveguide mode will also decrease. But if the size of the waveguide is further decreased, the mode size will increase. The reason is that the waveguide core becomes too small to confine most of the light in the core and thus the mode is expanded. The inverted semiconductor taper 410 is made such that the cross section is reduced from within the submicron range to the sub 100nm range in width. It is an advantage that the inverted taper can be made in the same etch step or similar etch steps as the other components of the semiconductor optical circuit, so that no additional steps or no additional processing steps requiring a different technology are needed. By way of example, an inverted taper 410 is shown in FIG. 4 to FIG. 8. In one example, the inverted taper 410 converts the cross section of the integrated semiconductor waveguide, e.g. having a size of 0.4µm x 0.2µm, to a system with a width of 100nm or less, e.g. having a size of 0.1µm x 0.2µm. By way of illustration, an integrated semiconductor optical waveguide with inverted semiconductor taper is shown in FIG. 4 in side view and in FIG. 5 in top view. The substrate 112 with bottom cladding region 114 and integrated semiconductor optical waveguide core 120 can be seen. The integrated semiconductor optical waveguide core 120 comprises an inverted semiconductor taper 410. Furthermore the overlying waveguide 134 comprising the first taper 130 with first taper facet 132 and the edge 140 can also be seen.

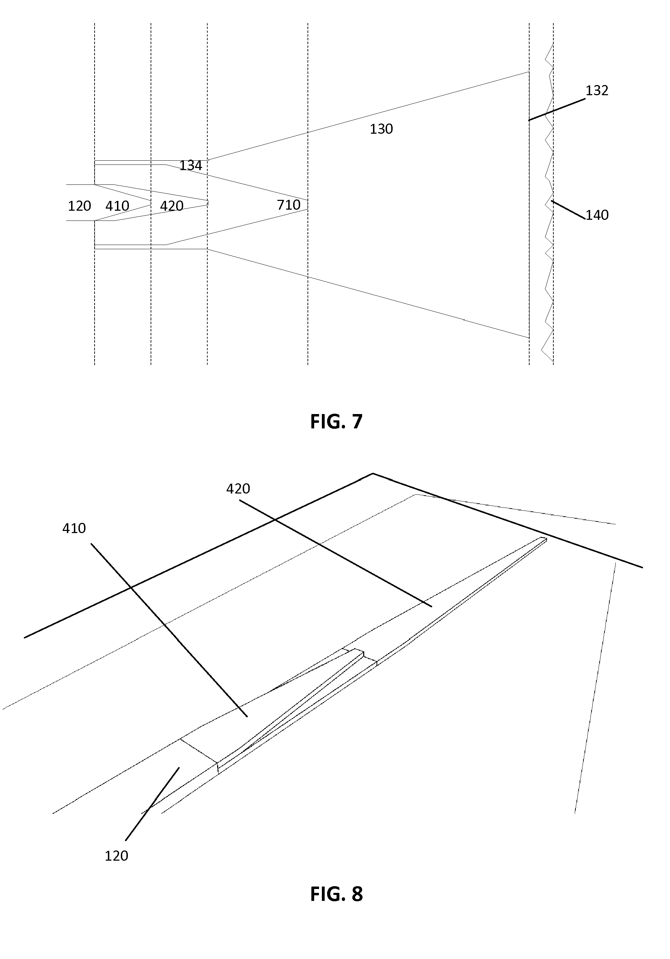

In one particular embodiment, the semiconductor taper 410 comprises a double tip structure. The double tip structure may be such that a first tip is overlying the second tip, a first tip structure being positioned on a second tip structure. Such an at least double tip structure can be obtained for example using a double etching process, whereby a shallow etch is performed for forming the first tip structure and a further etch is performed for forming the second tip structure. An example of a taper structure with at least two tip structures is shown in FIG. 6 in side view and in FIG. 7 in top view. In the shown example, the semiconductor taper comprises the double tip structure indicated with tips 410 and 420 and furthermore a top cladding layer 116 also is indicated. Also a further oxide inverted taper 710 can be seen. In FIG. 8 an elevated top view of the double tip structure is shown.

Using the taper structure as described above, for which an example is shown in FIG. 6 and FIG. 7, results in the required overall tip width for a certain loss, becoming larger. In other words, using the double tip shaped inverter taper, the coupling loss is smaller for a fixed tip width. The latter may be especially advantageous because for a single tip structure of an inverted taper, advantageously the width is below 100nm for achieving the envisaged low coupling losses. Manufacturing of tips with a width below 100nm is more demanding. FIG. 8 is a schematic illustration of a double tip structure wherein the thickness of the first tip is 220nm thickness whereas the thickness of the second tip is 150nm thickness. It has been found that such a structure results in a lower coupling loss compared to a taper having a single 220nm tip thickness.

The integrated optical circuit or optical device 100 according to some embodiments of the present invention furthermore also may comprise additional components as known for the person skilled in the art, such as for example optical couplers, further waveguides, further tapers, a tuneable filter, a phase-shifter, a grating, a modulator, a multiplexer, a demultiplexer or a combination thereof. Such further optical components can be active or passive.

By way of illustration, some particular examples are provided below, illustrating in more detail explicit implementations of optical devices according to embodiments of the present invention. It is to be noticed that further examples can easily be understood, e.g. wherein the relative positions, the number and/or the shape or length of the tapers is different. Furthermore the layer thicknesses can be different, the fabrication process can be different, etc.

In a first particular example, a structure as shown in FIG. 4 and FIG. 5 is described, wherein the integrated semiconductor waveguide is a silicon waveguide core 120 comprising a silicon inverted taper 410 tapering from a width of 400nm at the waveguide side to a tip width of 60nm. The taper length is 150 µm. The bottom cladding layer is a buried oxide supported by a silicon substrate. The overlying waveguide is a polymer waveguide 134 wherein a polymer 3D first taper 130 is present having a polymer waveguide facet 132. The polymer waveguide and first taper is made of a material having a refractive index of 1.55, being larger than the refractive index of the buried oxide. The first taper tapers from a cross section of 2 µm x 2µm at the waveguide side to a cross section of 11 µm to 11 µm. The taper length is 400 µm. Between a standard optical fiber and the first taper facet an index matching glue is used, having a refractive index of 1.5, being smaller than the refractive index of the polymer.

In a second particular example, a structure as shown in FIG. 6, FIG. 7 and FIG. 8 is described. The optical device has the same properties as described in the first particular example, but the taper of the integrated semiconductor optical waveguide core 120 comprises a double tip structure whereby the first tip 410 provides a transition from 220nm silicon thickness to 150nm silicon thickness and wherein the second tip 420 provides the transition from 150nm silicon thickness to the polymer structure. Furthermore an additional oxide inverted taper 710 also is provided. It has been found, for an exemplary structure as shown in FIG. 8, that the first tip 410 appropriately provides coupling between a first semiconductor thickness, e.g. the 220nm thickness silicon, and a second semiconductor thickness smaller than the first semiconductor thickness, e.g. the 150nm thickness silicon, whereas the second tip 420 is an inverted taper for coupling the mode between the silicon and the surrounding polymer/oxide material. As it was found that an inverted tip in 150nm thick silicon core provides better coupling than an inverted tip in a 220nm thick silicon core, the first tip also assists in improved coupling. The index matching glue is in the present example also present on top of the overlying waveguide, acting as top cladding layer.

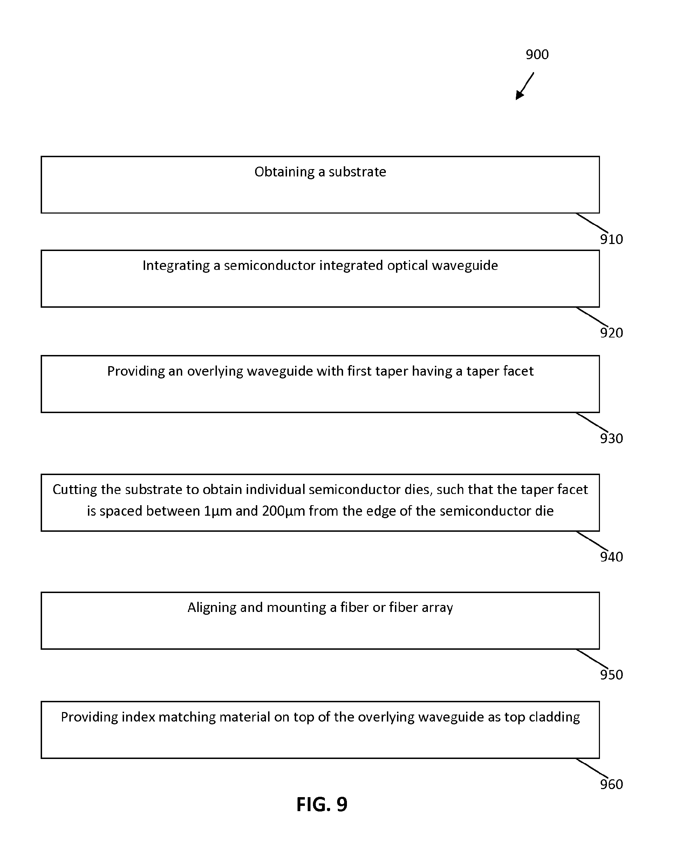

In one aspect, the present invention also relates to a method for manufacturing an optical device, advantageously for manufacturing an optical device as described in the first aspect. The method according to embodiments of the present invention comprises receiving a substrate wafer comprising an integrated semiconductor waveguide. The substrate wafer in one example may be a semiconductor substrate wafer comprising a buried oxide layer. The method furthermore comprises providing an overlying waveguide at least partly overlapping the semiconductor waveguide, the overlying waveguide comprising a first taper having a facet. The method also comprises cutting the substrate die, the distance between the edge of the die and the facet is between 1 micrometer and 200 micrometer. By way of illustration, embodiments of the present invention not limited thereto, an example of a method for manufacturing an optical device is shown in FIG. 9 and will be further described, illustrating standard as well as optional steps of the present invention. The steps described are the steps related to the manufacturing of the spot size converter. Further process steps for manufacturing an integrated waveguide and for processing semiconductor dies are known from prior art.

The method 900 of manufacturing an optical device as shown in FIG. 9 comprises obtaining a substrate 910 and integrating an integrated optical waveguide 920. In some embodiments, a substrate already comprising an integrated semiconductor optical waveguide is obtained. In some embodiments obtaining a substrate 910 may be obtaining a silicon-on-insulator wafer. Integrating an integrated optical waveguide 920 may comprise forming the integrated optical waveguide using deep UV lithography and etching steps. The integrated semiconductor waveguide may be integrated on the substrate wafer monolithically, heterogeneously or hybridly, as described above. Furthermore, in some advantageous embodiments, also a semiconductor taper may be formed, using deep UV lithography and etching steps. After the semiconductor integrated optical waveguide is formed, the method comprises providing 930 an overlying waveguide with a first taper having a taper facet. The latter may for example be performed by imprinting of a polymer waveguide, although embodiments of the present invention are not limited thereto. To imprint a structure , first a imprint resist (is a polymer with the right properties) is put on the wafer, e.g. using a dispenser. Then the structure is imprinted using a mold (stamp). Then the polymer is cured using UV light and the mold is removed. Process parameters are the polymer used, the pressure applied during imprint, the anti-adhesion layer on the mold, ... An advantage of an imprint proces that it is rather easier to make 3D structures than using conventional lithography and etching processes. Alternatively, if a suitable etching process is available to make the taper structure, the facet may also be etched instead of imprinted.

The substrate then is cut 940 so that at least one individual semiconductor die, but advantageously a plurality of semiconductor dies, is obtained. The latter may be performed using conventional cutting tools, such as for example a diamond saw with liquid cooled blade. Cutting is typically performed on a mounted substrate. The cutting thereby is performed such that a taper facet of the first taper is positioned at a distance d from an edge of the semiconductor die, whereby d is at least 1 micrometer and smaller than 200 micrometer.

After the substrate is cut also additional cleaning processes may be performed, not indicated in FIG. 9.

The external medium, e.g. the optical fiber, then is aligned with respect to the first taper facet and mounted, e.g. using index matching glue, or using a mechanical connection. The latter is indicated in step 950. In some cases also index matching material can be provided on top of the overlying waveguide as top cladding, as indicated in step 960.

By way of example, the manufacturing step of integrating an integrated semiconductor optical waveguide comprising a double tip structure on a silicon on insulator substrate will be described in more detail, embodiments of the present invention not being limited thereto. Starting from the silicon on insulator wafer, a first tip of a silicon inverted taper is provided, using deep UV lithography and etching. Thereafter, the silicon waveguides and a second tip of the inverted taper are formed using deep UV lithography and etching. A top oxide is then deposited and a CMP polishing process is applied. A silicon carbide etch stop layer deposition and lithographical process and etching is performed thereafter. Again a top oxide deposition is performed followed by a CMP polishing process. Finally using lithography and etching, a top oxide taper is formed, as indicated in FIG. 7. Thereafter the SiC etch stop layer is removed, resulting in an integrated semiconductor optical waveguide with double tip structure and oxide taper. The use of the silicon carbide etch stop layer is for controlling the distance (i.e. the thickness of the residual layer) between the semiconductor waveguide taper and the overlying waveguide.

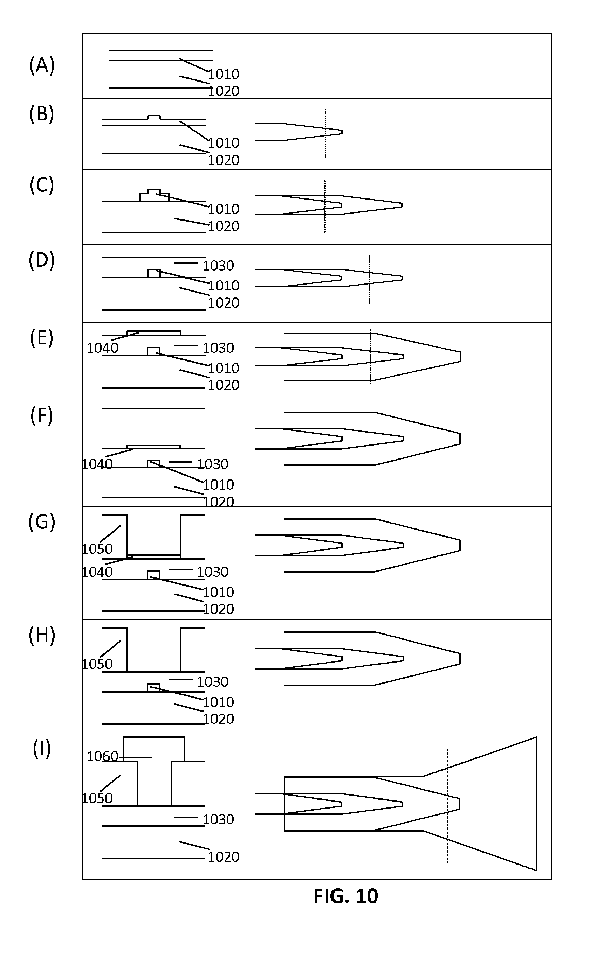

By way of example, FIG. 10 illustrates a particular example of an embodiment of a manufacturing technique for the optical system, embodiments of the present invention not being limited thereto. For each of the manufacturing steps shown, each time a cross-sectional view and top view is shown. Part (A) illustrates the initial substrate being a semiconductor on insulator substrate, in the present example being a silicon 1010 on insulator substrate 1020. In drawing (B) the situation is shown after the first shallow etch of the silicon layer 1010, whereby a tapered shape is formed in the upper side of the silicon layer 1010. In drawing (C) the situation is shown after the deeper etch in the silicon layer 1010. In the present example this etch results in the silicon layer being completely removed at some positions. In a following step a top oxide deposition 1030 is done and chemical/mechanical polishing is performed. The structure after these steps is shown in drawing (D). Drawing (E) illustrates the device after following stage, wherein an etch stop layer 1040 (in the present example SiliconCarbide, is deposited and an etch is performed. Thereafter a second top oxide 1050 deposition and chemical/mechanical polishing step is performed resulting in the system shown in drawing (F). An oxide etch results in the structure shown in drawing (G) and a subsequent removal of the etch stop layer results in the structure shown in drawing (H). In the last step shown, the structure after polymer 1060 deposition and imprint is illustrated, as can be seen in drawing (I).

It is an advantage of at least some embodiments of the present invention that the obtained optical devices allow coupling of radiation between an integrated semiconductor optical waveguide, e.g. an SOI waveguide, and an optical fiber whereby the insertion loss (IL) can be small (< 3dB) over a large wavelength range and also the polarization dependent loss (PDL) can be small.

While the invention has been illustrated and described in detail in the drawings and foregoing description, such illustration and description are to be considered illustrative or exemplary and not restrictive. The invention is not limited to the disclosed embodiments. For example, whereas embodiments of the optical device and of a manufacturing device were described, the present invention also relates to a method for handling radiation, the method comprising either coupling radiation from an external medium through an index matching material to a first facet of a polymer taper, the radiation further being tapered to an integrated semiconductor optical waveguide integrated on an integrated optical circuit or comprising guiding radiation from an integrated semiconductor optical waveguide integrated on an integrated optical circuit to an overlying waveguide with taper and further through a facet of the taper towards an external medium, whereby the facet of the taper in both cases is at a distance between 1 µm and 200µm of an edge of the integrated optical circuit. Further features and advantages of this method may express a functionality of the components as described in the first aspect.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

The foregoing description details certain embodiments of the invention. It will be appreciated, however, that no matter how detailed the foregoing appears in text, the invention may be practiced in many ways, and is therefore not limited to the embodiments disclosed. It should be noted that the use of particular terminology when describing certain features or aspects of the invention should not be taken to imply that the terminology is being re-defined herein to be restricted to include any specific characteristics of the features or aspects of the invention with which that terminology is associated.

## Claims

1. An optical device (100) for handling a radiation beam, the optical device (100) comprising
- a semiconductor die (110) comprising an integrated semiconductor optical waveguide core (120) integrated on the semiconductor die (110), and
- an at least partially overlying waveguide (134) comprising at least one first taper (130) shaped for coupling the radiation beam between the integrated semiconductor optical waveguide core (120) and an external medium (200), the first taper (130) having an entrance/exit facet (132) for receiving/emitting a radiation beam from/to the external medium (200),
**characterized in that** the facet (132) of the first taper (130) is spaced from the edge (140) of the semiconductor die (110) over a distance d, the distance d being at least 1 µm and less than 200µm.

2. An optical device (100) according to claim 1, wherein the first taper (130) is part of a polymer optical waveguide.

3. An optical device (100) according to any of the previous claims, wherein an angle between the facet (132) plane of the first taper (130) and an average plane through the semiconductor die (112) is between 80° and 90°.

4. An optical device (100) according to any of the previous claims, wherein at least the first taper (130) comprises a top cladding.

5. An optical device (100) according to any of the previous claims, wherein the first taper (132) is adapted for altering a mode size of the radiation beam in two directions.

6. An optical device (100) according to any of the previous claims, wherein the integrated semiconductor optical waveguide core (120)also comprises a semiconductor taper (410), the semiconductor taper (410) being adapted for increasing the size of the radiation mode upon decreasing the size of the semiconductor taper structure (410).

7. An optical device (100) according to claim 6, wherein the semiconductor taper (410) expands the optical mode size for forcing the radiation out of the integrated semiconductor optical waveguide core (120).

8. An optical device (100) according to any of claims 6 or 7, wherein the semiconductor taper comprises a double tip structure, a second tip (420) completely underlying the first tip (410).

9. An optical device (100) according to any of the previous claims, wherein the external medium (200) is an optical fiber and wherein the device (100) is coupled to at least one optical fiber (200) using an index matching material (210) between a facet (202) of the at least one optical fiber (200) and the facet (132) of the first taper (130).

10. An optical device (100) according to any of claims 1 to 8, wherein the external medium (200) is a laser and wherein the device is arranged with respect to the laser for coupling radiation in at the facet (132) of the first taper (130).

11. A method (900) for fabricating an optical device (100), the method (900) comprising
- obtaining (910,920) a substrate wafer comprising an integrated semiconductor optical waveguide core (120),
- providing (930) an at least partially overlying optical waveguide (134) at least partly overlapping the integrated semiconductor optical waveguide core (120), the at least partially overlying optical waveguide (134) comprising a first taper (130) having a facet (132), and
- cutting (940) the substrate wafer into a plurality of individual dies,
**characterized in that** said cutting (940) is performed such that, for at least one of the individual dies, the distance between the cutting edge and the facet (132) of the first taper (130) is between 1 micrometer and 200 micrometer.

12. A method according to claim 11, the method furthermore comprising, after said cutting (940), aligning a facet of an optical fiber and the facet of the first taper and providing (950) an optical coupling.

13. A method according to claim 12, wherein providing (950) an optical coupling comprises glueing the facet of the optical fiber to the facet of the first taper using an index matching glue.

14. A method according to any of claims 11 to 13, wherein providing the first taper comprises providing a polymer waveguide comprising the first taper with facet.

15. A method according to any of claims 11 to 14, wherein receiving (910) a substrate wafer comprises receiving a substrate wafer comprising a semiconductor waveguide and a semiconductor taper, being adapted for increasing the size of the radiation mode upon decreasing the size of the structure.

## Patentansprüche

1. Optische Vorrichtung (100) zum Handhaben eines Strahlungs-Strahls, wobei die optische Vorrichtung (100) Folgendes umfasst:
- ein Halbleiterplättchen (110), umfassend einen integrierten optischen Halbleiter-Wellenleiterkern (120), integriert auf dem Halbleiterplättchen (110), und
- einen mindestens teilweise überlagernden Wellenleiter (134), umfassend mindestens eine erste Abschrägung (130), geformt zum Koppeln des Strahlungs-Strahls zwischen dem integrierten optischen Halbleiter-Wellenleiterkern (120) und einem externen Medium (200), wobei die erste Abschrägung (130) eine Eintritts-/Austritts-Seitenfläche (132) zum Empfangen/Abgeben eines Strahlungs-Strahls von/zu dem externen Medium (200) aufweist,
**dadurch gekennzeichnet, dass** die Seitenfläche (132) der ersten Abschrägung (130) von der Kante (140) des Halbleiterplättchens (110) um eine Distanz d beabstandet ist, wobei die Distanz d mindestens 1 µm und weniger als 200 µm beträgt.

2. Optische Vorrichtung (100) nach Anspruch 1, wobei die erste Abschrägung (130) Teil eines optischen Polymer-Wellenleiters ist.

3. Optische Vorrichtung (100) nach einem der vorstehenden Ansprüche, wobei ein Winkel zwischen der Ebene der Seitenfläche (132) der ersten Abschrägung (130) und einer Durchschnittsebene durch das Halbleiterplättchen (112) zwischen 80° und 90° beträgt.

4. Optische Vorrichtung (100) nach einem der vorstehenden Ansprüche, wobei mindestens die erste Abschrägung (130) eine obere Verkleidung umfasst.

5. Optische Vorrichtung (100) nach einem der vorstehenden Ansprüche, wobei die erste Abschrägung (132) zum Ändern einer Modusgröße des Strahlungs-Strahls in zwei Richtungen angepasst ist.

6. Optische Vorrichtung (100) nach einem der vorstehenden Ansprüche, wobei der integrierte optische Halbleiter-Wellenleiterkern (120) außerdem eine Halbleiter-Abschrägung (410) umfasst, wobei die Halbleiter-Abschrägung (410) zum Vergrößern der Größe des Strahlungsmodus nach Verkleinern der Größe der Halbleiter-Abschrägungsstruktur (410) angepasst ist.

7. Optische Vorrichtung (100) nach Anspruch 6, wobei die Halbleiter-Abschrägung (410) die optische Modusgröße erweitert, um die Strahlung aus dem integrierten optischen Halbleiter-Wellenleiterkern (120) zu zwingen.

8. Optische Vorrichtung (100) nach einem der Ansprüche 6 oder 7, wobei die Halbleiter-Abschrägung eine Doppelspitzenstruktur umfasst, wobei eine zweite Spitze (420) vollständig der ersten Spitze (410) untergelagert ist.

9. Optische Vorrichtung (100) nach einem der vorstehenden Ansprüche, wobei das externe Medium (200) eine optische Faser ist und wobei die Vorrichtung (100) unter Verwendung eines Indexanpassungsmaterials (210) zwischen einer Seitenfläche (202) der mindestens einen optischen Faser (200) und der Seitenfläche (132) der ersten Abschrägung (130) an mindestens eine optische Faser (100) gekoppelt ist.

10. Optische Vorrichtung (100) nach einem der Ansprüche 1 bis 8, wobei das externe Medium (200) ein Laser ist und wobei die Vorrichtung in Bezug auf den Laser zum Einkoppeln von Strahlung an der Seitenfläche (132) der ersten Abschrägung (130) angeordnet ist.

11. Verfahren (900) zur Herstellung einer optischen Vorrichtung (100), wobei das Verfahren (900) Folgendes umfasst:
- Erhalten (910, 920) eines Substratwafers, umfassend einen integrierten optischen Halbleiter-Wellenleiterkern (120),
- Bereitstellen (930) eines mindestens teilweise überlagernden optischen Wellenleiters (134), der den integrierten optischen Halbleiter-Wellenleiterkern (120) mindestens teilweise überlappt, wobei der mindestens teilweise überlagernde optische Wellenleiter (134) eine erste Abschrägung (130) mit einer Seitenfläche (132) umfasst, und
- Schneiden (940) des Substratwafers in eine Vielzahl von einzelnen Plättchen, **dadurch gekennzeichnet, dass** das Schneiden (940) derart durchgeführt wird, dass, für mindestens eines der einzelnen Plättchen, die Distanz zwischen der Schnittkante und der Seitenfläche (132) der ersten Abschrägung (130) zwischen 1 Mikrometer und 200 Mikrometer ist.

12. Verfahren nach Anspruch 11, wobei das Verfahren nach dem Schneiden (940) ferner Ausrichten einer Seitenfläche einer optischen Faser und der Seitenfläche der ersten Abschrägung und das Bereitstellen (950) einer optischen Kopplung umfasst.

13. Verfahren nach Anspruch 12, wobei Bereitstellen (950) einer optischen Kopplung umfasst, die Seitenfläche der optischen Faser an die Seitenfläche der ersten Abschrägung unter Verwendung eines Indexanpassungsklebers zu kleben.

14. Verfahren nach einem der Ansprüche 11 bis 13, wobei Bereitstellen der ersten Abschrägung umfasst, einen Polymer-Wellenleiter bereitzustellen, umfassend die erste Abschrägung mit Seitenfläche.

15. Verfahren nach einem der Ansprüche 11 bis 14, wobei Empfangen (910) eines Substratwafers umfasst, einen Substratwafer zu empfangen, umfassend einen Halbleiter-Wellenleiter und eine Halbleiter-Abschrägung, angepasst zum Vergrößern der Größe des Strahlungsmodus nach Verkleinerung der Größe der Struktur.

## Revendications

1. Dispositif optique (100) destiné à manipuler un faisceau de rayonnement, le dispositif optique (100) comportant
- une pastille (110) à semiconducteur comportant un coeur (120) de guide d'ondes optique intégré à semiconducteur qui est intégré sur la pastille (110) à semiconducteur, et
- un guide d'ondes (134) au moins partiellement sus-jacent comportant au moins un premier biseau (130) conformé de façon à coupler le faisceau de rayonnement entre le coeur (120) de guide d'ondes optique intégré à semiconducteur et un milieu extérieur (200), le premier biseau (130) présentant une facette (132) d'entrée / sortie servant à recevoir / à émettre un faisceau de rayonnement en provenance / en direction du milieu extérieur (200),
**caractérisé en ce que** la facette (132) du premier biseau (130) est écartée du bord (140) de la pastille (110) à semiconducteur d'une distance d, la distance d étant d'au moins 1 µm et inférieure à 200 µm.

2. Dispositif optique (100) selon la revendication 1, le premier biseau (130) faisant partie d'un guide d'ondes optique en polymère.

3. Dispositif optique (100) selon l'une quelconque des revendications précédentes, un angle entre la facette (132) plane du premier biseau (130) et un plan moyen passant par la pastille à semiconducteur (112) étant compris entre 80° et 90°.

4. Dispositif optique (100) selon l'une quelconque des revendications précédentes, au moins le premier biseau (130) comportant une gaine supérieure.

5. Dispositif optique (100) selon l'une quelconque des revendications précédentes, le premier biseau (132) étant prévu pour modifier une taille de mode du faisceau de rayonnement dans deux directions.

6. Dispositif optique (100) selon l'une quelconque des revendications précédentes, le coeur (120) de guide d'ondes optique intégré à semiconducteur comportant également un biseau (410) à semiconducteur, le biseau (410) à semiconducteur étant prévu pour accroître la taille du mode de rayonnement suite à une diminution de la taille de la structure (410) de biseau à semiconducteur.

7. Dispositif optique (100) selon la revendication 6, le biseau (410) à semiconducteur agrandissant la taille du mode optique pour chasser le rayonnement hors du coeur (120) de guide d'ondes optique intégré à semiconducteur.

8. Dispositif optique (100) selon l'une quelconque des revendications 6 et 7, le biseau à semiconducteur comportant une structure à double pointe, une deuxième pointe (420) étant entièrement sous-jacente à la première pointe (410).

9. Dispositif optique (100) selon l'une quelconque des revendications précédentes, le milieu extérieur (200) étant une fibre optique et le dispositif (100) étant couplé à au moins une fibre optique (200) en utilisant un matériau (210) adaptateur d'indice entre une facette (202) de la ou des fibres optiques (200) et la facette (132) du premier biseau (130).

10. Dispositif optique (100) selon l'une quelconque des revendications 1 à 8, le milieu extérieur (200) étant un laser et le dispositif étant agencé par rapport au laser en vue de faire entrer par couplage un rayonnement au niveau de la facette (132) du premier biseau (130).

11. Procédé (900) de façonnage d'un dispositif optique (100), le procédé (900) comportant les étapes consistant à
- obtenir (910, 920) une tranche de substrat comportant un coeur (120) de guide d'ondes optique intégré à semiconducteur,
- mettre en place (930) un guide d'ondes optique (134) au moins partiellement sus-jacent recouvrant au moins partiellement le coeur (120) de guide d'ondes optique intégré à semiconducteur, le guide d'ondes optique (134) au moins partiellement sus-jacent comportant un premier biseau (130) présentant une facette (132), et
- découper (940) la tranche de substrat en une pluralité de pastilles individuelles, **caractérisé en ce que** ladite découpe (940) est effectuée de telle façon que, pour au moins une des pastilles individuelles, la distance entre le bord de découpe et la facette (132) du premier biseau (130) soit comprise entre 1 micromètre et 200 micromètres.

12. Procédé selon la revendication 11, le procédé comportant en outre les étapes consistant, après ladite découpe (940), à aligner une facette d'une fibre optique et la facette du premier biseau et à mettre en place (950) un couplage optique.

13. Procédé selon la revendication 12, la mise en place (950) d'un couplage optique comportant l'étape consistant à coller la facette de la fibre optique à la facette du premier biseau en utilisant une colle adaptatrice d'indice.

14. Procédé selon l'une quelconque des revendications 11 à 13, la réalisation du premier biseau comportant l'étape consistant à réaliser un guide d'ondes en polymère comportant le premier biseau à facette.

15. Procédé selon l'une quelconque des revendications 11 à 14, la réception (910) d'une tranche de substrat comportant l'étape consistant à recevoir une tranche de substrat comportant un guide d'ondes à semiconducteur et un biseau à semiconducteur, prévu pour accroître la taille du mode de rayonnement suite à une diminution de la taille de la structure.
